(19) Europäisches Patentamt / European Patent Office / Office européen des brevets

(11) **EP 1 678 018 B1**

(12) **EUROPÄISCHE PATENTSCHRIFT**

(45) Veröffentlichungstag und Bekanntmachung des Hinweises auf die Patenterteilung:
**28.11.2007 Patentblatt 2007/48**

(21) Anmeldenummer: **04790927.0**

(22) Anmeldetag: **27.10.2004**

(51) Int Cl.:
**B60T 7/12** *(2006.01)*   **B60T 13/74** *(2006.01)*

(86) Internationale Anmeldenummer:
**PCT/EP2004/012154**

(87) Internationale Veröffentlichungsnummer:
**WO 2005/042320 (12.05.2005 Gazette 2005/19)**

(54) **VERFAHREN ZUM STABILISIEREN EINES IN STILLSTAND ABGEBREMSTEN KRAFTFAHRZEUGS UND BREMSSYSTEM ZUM AUSFÜHREN DES VERFAHRENS**

METHOD FOR STABILIZING A MOTOR VEHICLE WHOSE SPEED IS REDUCED TO A STANDSTILL AND BRAKE SYSTEM FOR CARRYING OUT SAID METHOD

PROCEDE DE STABILISATION D'UN VEHICULE FREINE DE MANIERE A ETRE IMMOBILISE, ET SYSTEME DE FREINAGE POUR LA MISE EN OEUVRE DE CE PROCEDE

(84) Benannte Vertragsstaaten:
**AT BE BG CH CY CZ DE DK EE ES FI FR GB GR HU IE IT LI LU MC NL PL PT RO SE SI SK TR**

(30) Priorität: **31.10.2003 DE 10351026**

(43) Veröffentlichungstag der Anmeldung:
**12.07.2006 Patentblatt 2006/28**

(73) Patentinhaber: **Lucas Automotive GmbH 56070 Koblenz (DE)**

(72) Erfinder: **BACH, Thomas 56332 Wolken (DE)**

(74) Vertreter: **Thum, Bernhard Wuesthoff & Wuesthoff Patent- und Rechtsanwälte Schweigerstrasse 2 81541 München (DE)**

(56) Entgegenhaltungen:
**DE-A- 10 063 063        DE-A- 10 104 498
DE-A- 10 213 346        DE-A- 19 620 344**

EP 1 678 018 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

FACHGEBIET DER ERFINDUNG

Die vorliegende Erfindung betrifft ein Verfahren zum Stabilisieren eines in Stillstand abgebremsten Kraftfahrzeugs, das mit einem fahrerunabhängig betätigbaren Bremssystem ausgerüstet ist, wobei das Bremssystem eine Betriebsbremse und eine Feststellbremse umfasst. Die Erfindung betrifft ferner ein entsprechendes Bremssystem.

STAND DER TECHNIK

Es ist aus dem Stand der Technik bereits bekannt, Kraftfahrzeugbremssysteme mit einer fahrerunabhängig betätigbaren Betriebsbremse und Feststellbremse auszurüsten. Beispielsweise beschreibt die EP 0 825 081 B1 ein derartiges Bremssystem, bei welchem die Betriebsbremse hydraulisch und die Feststellbremse elektromechanisch betätigt wird. Dies bedeutet, dass in einem Betriebsbremsmodus, beispielsweise dann, wenn das Fahrzeug in seinem Fahrbetrieb abgebremst wird, die einzelnen Räder des Fahrzeugs durch diesen zugeordnete hydraulisch betätigbare Bremseinrichtungen abgebremst werden. Wird das Fahrzeug jedoch in den Stillstand abgebremst und abgestellt, d.h. wird von dem Betriebsbremsmodus in einen Feststellbremsmodus übergewechselt, so wird die Feststellbremse elektromechanisch, insbesondere über einen selbstsperrenden Mechanismus, aktiviert und in diesem Feststellbremsmodus bis zum aktiven Lösen des Feststellbremsmodus gehalten.

Die EP 0 825 081 B1 schlägt bei einem derartigen Bremssystem vor, dass der Übergang von dem Betriebsbremsmodus in den Feststellbremsmodus erst dann erfolgt, wenn die von der Feststellbremse aufgebrachte Bremskraft die von der Betriebsbremse aufgebrachte Bremskraft erreicht hat. Dabei besteht jedoch das Problem, dass im Feststellbremsmodus eine andere Bremskraftverteilung, d.h. eine andere Verteilung einzelner, die Gesamtbremskraft bestimmender Bremskraftkomponenten auf die Räder des Kraftfahrzeugs, vorliegt als im Betriebsbremsmodus. Bei vielen Bremssystemen werden im Feststellbremsmodus lediglich die Räder der Hinterachse abgebremst, wohingegen im Betriebsbremsmodus an allen vier Rädern des Kraftfahrzeugs Bremskräfte anliegen. Dies kann dazu führen, dass beim Übergang vom Betriebsbremsmodus in den Feststellbremsmodus ein unerwünschtes Wegrollen oder Wegrutschen des Fahrzeugs erfolgt, da die Bremskräfte, die auf die im Feststellbremsmodus abgebremsten Räder wirken, nicht ausreichend groß sind, um das Fahrzeug im Stillstand zu halten. Ein derartiger Zustand ergibt sich beispielsweise dann, wenn gerade an den im Feststellbremsmodus abgebremsten Rädern aufgrund vereister Fahrbahnstellen geringe Reibungskoeffizienten vorliegen. Ein weiterer Beispielfall, der zu der vorstehend geschilderten Situation eines unerwünschten Wegrollens führen kann, tritt bei starker Beladung eines auf einer geneigten Fahrbahn stehenden Fahrzeugs auf.

AUFGABE UND LÖSUNG GEMÄß DER ERFINDUNG

Es ist demgegenüber eine Aufgabe der vorliegenden Erfindung, ein Verfahren zum Stabilisieren eines in Stillstand abgebremsten Kraftfahrzeugs sowie ein entsprechendes Bremssystem bereitzustellen, welche beim Übergang von dem Betriebsbremsmodus in den Feststellbremsmodus zuverlässig das Fahrzeug im Stillstand halten.

Diese Aufgabe wird durch ein Verfahren zum Stabilisieren eines in Stillstand abgebremsten Kraftfahrzeugs gelöst, das mit einem fahrerunabhängig betätigbaren Bremssystem mit einer Betriebsbremse und einer Feststellbremse ausgerüstet ist,
wobei nach Erreichen des Fahrzeugstillstands eine von der Feststellbremse zu erzeugende, den Fahrzeugstillstand aufrechterhaltende Feststell-Bremskraft bestimmt wird, wobei weiter mit der Betriebsbremse fahrerunabhängig eine die Feststellbremse simulierende Betriebs-Bremskraft erzeugt wird, die betragsmäßig größer als die vorher bestimmte Feststell-Bremskraft ist und deren Kraftkomponenten auf die Fahrzeugräder in Analogie zu den Kraftkomponenten der Feststell-Bremskraft verteilt sind, wobei weiter bei oder nach Erreichen der die Feststellbremse simulierenden Betriebs-Bremskraft die vorher bestimmte Feststell-Bremskraft mit der Feststellbremse aufgebaut wird und wobei bei oder nach Erreichen der Feststell-Bremskraft in der Feststellbremse die Betriebsbremse deaktiviert wird.

Die vorstehende Aufgabe wird ferner durch ein entsprechend arbeitendes Bremssystem gelöst.

Bei der Erfindung wird also nicht die zum Abbremsen des Kraftfahrzeugs in der Betriebsbremse aufgebaute Bremskraft zur Bestimmung der Feststell-Bremskraft verwendet. Stattdessen wird erfindungsgemäß eine den Fahrzeugstillstand aufrechterhaltende Feststell-Bremskraft betragsmäßig bestimmt. Nach betragsmäßiger Bestimmung dieser Feststell-Bremskraft wird in der Betriebsbremse die die Feststellbremse simulierende Betriebs-Bremskraft aufgebaut, wobei dies erfordern kann, dass die mit der Betriebsbremse zum Herbeiführen des Fahrzeugstillstands, d.h. zum vollständigen Abbremsen des Fahrzeugs, aufgebaute Bremskraft betragsmäßig erhöht, gehalten oder reduziert wird, je nach Größe der vorher bestimmten Feststell-Bremskraft. Sobald die die Feststellbremse simulierende Betriebs-Bremskraft aufgebaut ist, kann dann die tatsächliche Aktivierung der Feststellbremse erfolgen, wobei diese in einen Zustand versetzt wird, in welchem sich die vorher bestimmte Feststell-Bremskraft einstellt. Sodann kann nach vollständiger Aktivierung der Feststellbremse die Betriebsbremse deaktiviert werden. Das Fahrzeug befindet sich dann in einem durch die Feststellbremse gesicherten Zustand, wobei die Feststellbremse das Fahrzeug zuverlässig gegen ein unbeabsichtigtes Wegrollen oder Wegrutschen sichert.

WEITERBILDUNGEN DER ERFINDUNG

Bei einer Weiterbildung der Erfindung ist vorgesehen, dass nach Erreichen des Fahrzeugstillstands die in der Betriebsbremse aufgebaute Bremskraft fahrerunabhängig zunächst gehalten wird und nach Ablauf eines vorbestimmten ersten Zeitintervalls auf den Betrag der die Feststellbremse simulierenden Betriebs-Bremskraft gesetzt wird. Mit anderen Worten wird nach einer vollständigen Abbremsung des Kraftfahrzeugs und bei einem Ausbleiben weiterer Aktionen des Fahrers, die auf eine Fortsetzung der Fahrt schließen lassen, zunächst mittels der Betriebsbremse die beim Abbremsen des Fahrzeugs in der Betriebsbremse aufgebaute Bremskraft über das erste Zeitintervall aufrechterhalten. Dieses Zeitintervall kann beispielsweise einige Minuten betragen. Stellt sich in diesem Zeitintervall keine Änderung durch eine Aktion des Fahrers ein, so wird erfindungsgemäß automatisch der Übergang zur Aktivierung der Feststellbremse eingeleitet. Dies ist insbesondere deshalb vorteilhaft, da mit der Betriebsbremse in der Regel die zum dauerhaften Stabilisieren des in den Stillstand abgebremsten Kraftfahrzeugs erforderlichen Bremskräfte nicht oder nur mit sehr hohem Energieaufwand aufgebracht werden können. Der Grund dafür ist, dass die Betriebsbremse in der Regel als hydraulisch betätigte Bremse ausgebildet ist und wegen Leckagen und mechanischen Verlusten zur Aufrechterhaltung der Bremskraft auch eine regelmäßige und deshalb energieaufwendige Förderung von Hydraulikfluid erfordert. Durch Übergabe der Bremswirkung auf eine elektromechanisch arbeitende Feststellbremse mit gegebenenfalls selbsthemmendem Mechanismus kann die Betriebsbremse deaktiviert werden.

Durch ausreichend lange Auslegung des ersten Zeitintervalls kann jedoch verhindert werden, dass die Feststellbremse frühzeitig aktiviert wird, was eine von dem Fahrer beabsichtigte Weiterfahrt unerwünscht verzögern könnte.

Eine Weiterbildung der Erfindung sieht in diesem Zusammenhang vor, dass bei aktiver Betätigung der Betriebsbremse durch den Fahrer innerhalb des ersten Zeitintervalls der Lauf des ersten Zeitintervalls erneut gestartet wird. Eine aktive Betätigung der Betriebsbremse innerhalb des ersten Zeitintervalls lässt darauf schließen, dass der Fahrer möglicherweise erkannt hat, dass die in dem Betriebsbremssystem aufgebaute Bremskraft zum Abbremsen des Kraftfahrzeugs nicht ausreichend war, um das Fahrzeug im Stillstand zu halten. Der Fahrer betätigt daher die Betriebsbremse nochmals und erhöht die darin aufgebaute Bremskraft auf einen höheren Betrag. Diese Aktion sorgt dann dafür, dass die einzelnen Schritte des erfindungsgemäßen Verfahrens neu gestartet werden, insbesondere der Lauf des ersten Zeitintervalls neu gestartet wird.

Eine Weiterbildung der Erfindung sieht vor, dass die die Feststellbremse simulierende Betriebs-Bremskraft über ein vorbestimmtes zweites Zeitintervall in der Betriebsbremse aufrechterhalten wird. Das Einführen des zweiten Zeitintervalls gewährleistet, dass durch Komponenten einer Fahrzeugsensorik erfasst werden kann, ob die die Feststellbremse simulierende Betriebs-Bremskraft ausreichend groß ist, um das Fahrzeug im Stillstand zu stabilisieren. Ferner gewährleistet dieses zweite Zeitintervall einen hinreichend großen Zeitraum dafür, in der Feststellbremse die Feststell-Bremskraft aufzubauen, und zwar unter verhältnismäßig geringem Energieaufwand. Da einzelne Bremskomponenten, wie beispielsweise Bremskolben und Schwimmsattelanordnungen, bereits durch die Betriebsbremse in den Bremszustand versetzt sind, kann die Feststellbremse, die diese Komponenten zur Erzielung der Bremskraft ebenfalls nutzt, ohne große Gegenkräfte in eine die Feststell-Bremskraft gewährleistende Stellung überführt werden.

Ferner ist bei einer Ausführungsvariante der Erfindung vorgesehen, dass bei aktiver Betätigung der Betriebsbremse durch den Fahrer vor Ablauf des zweiten oder dritten Zeitintervalls eine Deaktivierung der Feststellbremse erfolgt. Dies bedeutet, dass der Übergang in den Feststellbremsmodus, d.h. eine Aktivierung der Feststellbremse unterbleibt oder abgebrochen wird, wenn der Fahrer aktiv innerhalb des zweiten oder dritten Zeitintervalls eingreift.

Hinsichtlich der Bestimmung der Feststell-Bremskraft kann erfindungsgemäß vorgesehen sein, dass der Betrag oder/und eine Bremskraftverteilung der Feststell-Bremskraft auf einzelne Fahrzeugräder aus Betriebsparametern des Kraftfahrzeugs ermittelt werden. In diesem Rahmen sieht eine Ausführungsvariante der Erfindung vor, dass die Betriebsparameter Informationen über die aktuelle Fahrzeugneigung oder/und den aktuellen Beladungszustand oder/und die aktuelle Bremsentemperatur oder/und die zwischen Fahrzeugrädern und Fahrbahnoberfläche herrschenden Reibungsverhältnissen beinhalten. Zur Bestimmung dieser Betriebsparameter kann beispielsweise ein Neigungssensor, Sensoren der Fahrzeugdämpfung, Temperatursensoren, Schlupferfassungssensoren oder Drehzahlsensoren benutzt werden.

Bezüglich der die Feststellbremse simulierenden Betriebs-Bremskraft kann erfindungsgemäß vorgesehen sein, dass diese die vorher bestimmte Feststell-Bremskraft um wenigstens 5% - bezogen auf den Betrag der vorher bestimmten Feststell-Bremskraft - übersteigt. Bei einer alternativen Auslegung des Bremssystems können jedoch auch betragsmäßig größere Abweichungen von Feststell-Bremskraft und Betriebs-Bremskraft gewählt werden, beispielsweise von wenigstens 10 %, wenigstens 15 % oder wenigstens 20 %.

Eine technisch besonders einfache Implementierung der Erfindung ergibt sich beispielsweise dann, wenn die Steuerung von Betriebsbremse und Feststellbremse in einem Stabilitätssystem des Kraftfahrzeugs integriert ist. Dabei können bereits im Stabilitätssystem vorhandene Komponenten, wie Prozessoren oder Datenspeicher, genützt werden.

Wie vorstehend bereits angedeutet, können verschiedene Aktionen des Fahrers während der Durchführung einzelner Schritte des erfindungsgemäßen Verfahrens zu einem Abbruch des Verfahrens führen. Ein weiterer derartiger Fall liegt beispielsweise dann vor, wenn der Fahrer aktiv anfährt. In diesem Fall sieht die Erfindung vor, dass die Betriebsbremse oder/und die Feststellbremse selbsttätig gelöst werden.

KURZE BESCHREIBUNG DER ZEICHNUNGEN

Die Erfindung wird im Folgenden beispielhaft anhand der beiliegenden Figuren beschrieben. Es stellen dar:

Fig. 1    eine schematische Darstellung der Räder eines Kraftfahrzeugs;

Fig. 2    ein Zeit-Kraft-Diagramm zu einem ersten Ablauf des erfindungsgemäßen Verfahrens und

Fig. 3    ein Zeit-Kraft-Diagramm zu einem zweiten Ablauf des erfindungsgemäßen Verfahrens.

BESCHREIBUNG BEVORZUGTER AUSFÜHRUNGSBEISPIELE

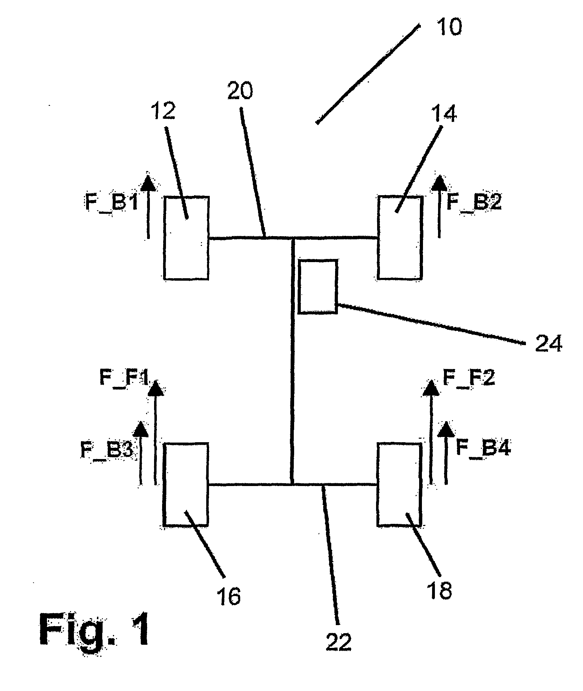

In Fig. 1 ist ein allgemein mit 10 bezeichnetes, schematisch dargestelltes Kraftfahrzeug gezeigt. Dieses weist vier Räder auf, nämlich die beiden Vorderräder 12 und 14, sowie die beiden Hinterräder 16 und 18.

Die beiden Vorderräder 12 und 14 sind über eine Vorderachse 20 gekoppelt, während die beiden Hinterräder 16 und 18 über eine Hinterachse 22 gekoppelt sind. Auf alle vier Räder 12, 14, 16 und 18 wirkt eine hydraulisch betätigbare Betriebsbremse, deren Steuerung allgemein mit 24 bezeichnet ist. Im Betriebsbremsmodus, d.h. bei Betätigung der Betriebsbremse im normalen Fahrbetrieb des Kraftfahrzeugs 10, wirkt auf das Vorderrad 12 die Bremskraft F_B1, auf das Vorderrad 14 die Bremskraft F_B2, auf das Hinterrad 16 die Bremskraft F_B3 und auf das Hinterrad 18 die Bremskraft F_B4. Im Feststellbremsmodus hingegen, beispielsweise dann, wenn das Fahrzeug abgestellt wurde, wirken im Beispielsfall lediglich auf die beiden Hinterräder 16 und 18 Haltekräfte, nämlich auf das Hinterrad 16 die Haltekraft F_F1 und auf das Hinterrad 18 die Haltekraft F_F2. Diese Haltekräfte werden von der elektromechanisch betätigbaren Feststellbremse aufgebracht.

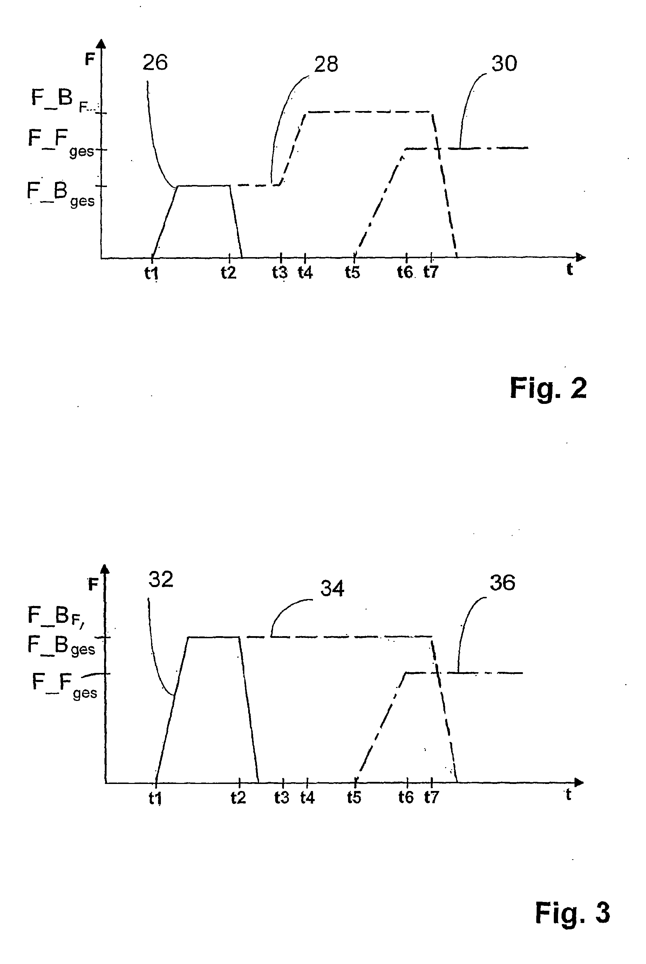

Im Folgenden wird mit Bezug auf Fig. 2 das Zusammenwirken von Betriebsbremse und Feststellbremse gemäß einer ersten Variante des erfindungsgemäßen Verfahrens beschrieben.

Zum Zeitpunkt t1 betätigt der Fahrer des sich bewegenden Kraftfahrzeugs 10 die Betriebsbremse, indem er ein Bremspedal niederdrückt. Dadurch wird entsprechend der mit durchgezogener Linie gezeichneten Kurve 26 in der Betriebsbremse die Bremskraft $F\_B_{ges}$ aufgebaut. Diese setzt sich zusammen aus:

$$F\_B_{ges} = F\_B1 + F\_B2 + F\_B3 + F\_B4$$

Zwischen den Zeitpunkten t1 und t2 wird das Fahrzeug aufgrund der Bremswirkung der Betriebsbremse in Stillstand abgebremst. Zum Zeitpunkt t2 gibt der Fahrer das Bremspedal frei. Entsprechend der strichliert gezeichneten Kurve 28 wird in der Betriebsbremse allerdings die Bremskraft $F\_B_{ges}$ bis zum Zeitpunkt t3 aufrechterhalten. In diesem Zeitintervall, d.h. zwischen den Zeitpunkten t2 und t3, wird eine Feststell-Bremskraft $F\_F_{ges}$ bestimmt. Diese Feststell-Bremskraft $F\_F_{ges}$ wird aus verschiedenen Fahrzeugparametern und Betriebsparametern ermittelt, wie z.B. der aktuellen Neigung des Fahrzeugs, dem aktuellen Beladungszustand, der aktuellen Bremsentemperatur, den Reibungsverhältnissen zwischen jedem Fahrzeugrad und Fahrbahnoberfläche. Die Feststell-Bremskraft $F\_F_{ges}$ wird auf einen Wert festgelegt, der unter Berücksichtigung dieser Parameter eine zuverlässige Stabilisierung des Kraftfahrzeugs in dem in den Stillstand abgebremsten Zustand gewährleistet.

Zum Zeitpunkt t3 ist die Feststell-Bremskraft $F\_F_{ges}$ betragsmäßig bestimmt. Sofern in dem Zeitraum zwischen t2 und t3 keine aktive Beeinflussung des Bremssystems oder des Fahrzeugzustands von Seiten des Fahrers erfolgt ist, wird vom Zeitpunkt t3 bis zum Zeitpunkt t4 entsprechend dem Verlauf der strichlierten Kurve 28 die Betriebsbremse des Fahrzeugs 10 ohne aktives Einwirken des Fahrers derart angesteuert, dass die von der Betriebsbremse aufgebrachten Bremskräfte insgesamt die die Feststellbremse simulierende Betriebs-Bremskraft $F\_B_F$ erreichen. Diese die Feststellbremse simulierende Betriebs-Bremskraft $F\_B_F$ ist betragsmäßig größer als die vorher bestimmte Feststell-Bremskraft $F\_F_{ges}$. Es gilt demnach:

$$F\_B_F > F\_F_{ges}$$

Die Betriebs-Bremskraft $F\_B_F$ wird, sofern kein aktives Einwirken von Seiten des Fahrers erfolgt, zum Zeitpunkt t4 erreicht und bis zum Zeitpunkt t7 unverändert aufrechterhalten. Innerhalb dieses Zeitintervalls t4 bis t7 erfolgt nach Ablauf einer bestimmten Zeitspanne, d.h. zum Zeitpunkt t5 eine Aktivierung der Feststellbremse gemäß der strichpunktierten Kurve 30. Mit anderen Worten wird zum Zeitpunkt t5 die Feststellbremse aktiviert und ein dieser zugeordneter elektromechanischer Zustellmechanismus angesteuert, bis er eine Stellung erreicht, die der vorher bestimmten Feststell-Bremskraft $F\_F_{ges}$ entspricht. Weil zum Zeitpunkt t6 die der Feststell-Bremskraft $F\_F_{ges}$ entsprechende Bremsenstellung erreicht wurde, wird die Feststellbremse nicht weiter zugestellt, d.h. ihr Zustand wird ab dem Zeitpunkt t6 unverändert gehalten.

Zum Zeitpunkt t7, kurze Zeit nach Erreichen des Zeitpunkts t6, wird dann die Betriebsbremse deaktiviert, d.h. der in der Betriebsbremse herrschende Hydraulikdruck wird auf sein Ausgangsniveau abgebaut. Dies bedeutet, dass das Fahrzeug nun nur noch von der Feststellbremse in dem unbewegten Zustand gehalten wird, wobei die Feststellbremse eine Feststell-Bremskraft vom Betrag $F\_F_{ges}$ gewährleistet.

Die vorstehend beschriebenen Schritte können zeitlich je nach Wunsch gesteuert werden. Beispielsweise kann das Zeitintervall zwischen t2 und t3 eine oder mehrere Minuten dauern. Die Zeitintervalle können auch situationsabhängig gewählt werden.

Es sei darauf hingewiesen, dass sich die Feststell-Bremskraft $F\_F_{ges}$ aus Einzelkomponenten $F\_F1$ und $F\_F2$ zusammensetzt, wie in Fig. 1 gezeigt, d.h. aus verschiedenen an den Hinterrädern anliegenden Bremskräften, so dass im Beispielsfall gilt:

$$F\_F_{ges} = F\_F1 + F\_F2$$

Es ist jedoch im Rahmen der Erfindung gleichermaßen möglich, die Feststell-Bremskraft $F\_F_{ges}$ durch eine andersartige Bremskraftverteilung zu erreichen, beispielsweise durch Aufteilung auf drei oder alle vier Fahrzeugräder, auf zwei Fahrzeugräder auf derselben Fahrzeugseite oder auf diagonal angeordnete Fahrzeugräder. Gleichermaßen setzen sich die von der Betriebsbremse aufgebrachten Bremskräfte $F\_B_{ges}$ bzw. $F\_B_F$ aus verschiedenen in den einzelnen Fahrzeugrädern anliegenden Komponenten zusammen, wobei die zum Abbremsen des Fahrzeugs aufgebaute Betriebs-Bremskraft $F\_B_{ges}$ aus an allen vier Fahrzeugrädern 12 bis 18 anliegenden Kraftkomponenten zusammengesetzt sein kann, wohingegen die die Feststellbremse simulierende Betriebs-Bremskraft $F\_B_F$ in Analogie zu der Feststell-Bremskraft $F\_F_{ges}$ aus lediglich an zwei Fahrzeugrädern anliegenden Kraftkomponenten zusammengesetzt sein kann.

Der in Fig. 3 gezeigte Verfahrensablauf einer zweiten erfindungsgemäßen Variante unterscheidet sich von dem Verfahrensablauf gemäß Fig. 2 lediglich darin, dass der Fahrer entsprechend der Kurve 32 zum Abbremsen des Fahrzeugs 10 das Bremspedal zum Zeitpunkt t1 wesentlich intensiver niederdrückt und damit eine wesentlich höhere Bremskraft $F\_B_{ges}$ in der Betriebsbremse aufbaut. Zum Zeitpunkt t2 gibt er das Bremspedal wieder frei, wobei wie vorstehend mit Bezug auf Fig. 2 geschildert, die Bremskraft $F\_B_{ges}$ entsprechend der strichlierten Kurve 34 aufrechterhalten wird. Zwischen den Zeitpunkten t2 und t3 wird die Feststell-Bremskraft $F\_F_{ges}$ bestimmt, wobei das Bremssystem feststellt, dass die augenblicklich aufgebaute Betriebs-Bremskraft $F\_B_{ges}$ bereits größer als die bestimmte Feststell-Bremskraft $F\_F_{ges}$ ist. Demnach wird die augenblicklich herrschende Betriebs-Bremskraft $F\_B_F$ betragsmäßig bis zum Zeitpunkt t7 beibehalten und - wie vorstehend mit Bezug auf Fig. 2 beschrieben - zum Zeitpunkt t5 damit begonnen, die Feststell-Bremskraft $F\_F_{ges}$ entsprechend der strichpunktierten Kurve 36 aufzubauen. Ist dies zum Zeitpunkt t6 erfolgt, so wird wenig später zum Zeitpunkt t7 die die Feststellbremse simulierende Betriebs-Bremskraft $F\_B_F$ in der Betriebsbremse abgebaut, indem die Betriebsbremse deaktiviert wird.

Die Erfindung zeigt eine Möglichkeit auf, bei einem herkömmlichen Bremssystem durch gezielte Ansteuerung von Betriebsbremse und Feststellbremse einen zuverlässigen Übergang in den Feststellbremsmodus zu gewährleisten ohne das Risiko einzugehen, dass die im Feststell-Bremsmodus anliegenden Bremskräfte keinen ausreichenden Halt bieten.

**Patentansprüche**

1. Verfahren zum Stabilisieren eines in Stillstand abgebremsten Kraftfahrzeugs (10), das mit einem fahrerunabhängig betätigbaren Bremssystem ausgerüstet ist, welches eine Betriebsbremse und eine Feststellbremse umfasst, wobei nach Erreichen des Fahrzeugstillstands eine von der Feststellbremse zu erzeugende, den Fahrzeugstillstand aufrecht erhaltende Feststell-Bremskraft ($F\_F_{ges}$) bestimmt wird,
**dadurch gekennzeichnet,**
**dass** mit der Betriebsbremse fahrerunabhängig eine die Feststellbremse simulierende Betriebs-Bremskraft ($F\_B_F$) erzeugt wird, die betragsmäßig größer als die vorher bestimmte Feststell-Bremskraft ($F\_F_{ges}$) ist und deren Kraftkomponenten auf die Fahrzeugräder in Analogie zu den Kraftkomponenten der Feststell-Bremskraft ($F\_F_{ges}$) verteilt sind,
**dass** bei oder nach Erreichen der die Feststellbremse simulierenden Betriebs-Bremskraft ($F\_B_F$) die vorher bestimmte Feststell-Bremskraft ($F\_F_{ges}$) mit der Feststellbremse aufgebaut wird
und **dass** bei oder nach Erreichen der Feststell-Bremskraft ($F\_F_{ges}$) in der Feststellbremse die Betriebsbremse deaktiviert wird.

2. Verfahren nach Anspruch 1,
   **dadurch gekennzeichnet, dass** nach Erreichen des Fahrzeugstillstands die in der Betriebsbremse aufgebaute Bremskraft ($F\_B_{ges}$) fahrerunabhängig zunächst gehalten wird und nach Ablauf eines vorbestimmten ersten Zeitintervalls (t2 - t3) auf die die Feststellbremse simulierende Betriebs-Bremskraft ($F\_B_F$) gesetzt wird.

3. Verfahren nach Anspruch 2,
   **dadurch gekennzeichnet, dass** bei aktiver Betätigung der Betriebsbremse durch den Fahrer innerhalb des ersten Zeitintervalls (t2 - t3) der Lauf des ersten Zeitintervalls erneut gestartet wird.

4. Verfahren nach einem der Ansprüche 1 bis 3,
   **dadurch gekennzeichnet, dass** die die Feststellbremse simulierende Betriebs-Bremskraft ($F\_B_F$) über ein vorbestimmtes zweites Zeitintervall (t4 - t7) in der Betriebsbremse aufrechterhalten wird.

5. Verfahren nach einem der vorangehenden Ansprüche,
   **dadurch gekennzeichnet, dass** nach Erreichen der die Feststellbremse simulierenden Betriebs-Bremskraft ($F\_B_F$) die Feststellbremse nach Ablauf eines vorbestimmten dritten Zeitintervalls (t4 - t5) aktiviert wird.

6. Verfahren nach Anspruch 4 oder 5,
   **dadurch gekennzeichnet, dass** bei aktiver Betätigung der Betriebsbremse durch den Fahrer vor Ablauf des zweiten (t4 - t7) oder dritten Zeitintervalls (t4 - t5) eine Deaktivierung der Feststellbremse erfolgt.

7. Verfahren nach einem der vorangehenden Ansprüche,
   **dadurch gekennzeichnet, dass** der Betrag oder/und eine Bremskraftverteilung der Feststell-Bremskraft ($F\_F_{ges}$) auf einzelne Fahrzeugräder aus Betriebsparametern des Kraftfahrzeugs (10) ermittelt werden.

8. Verfahren nach Anspruch 7,
   **dadurch gekennzeichnet, dass** die Betriebsparameter Informationen über die aktuelle Fahrzeugneigung oder/und den aktuellen Beladungszustand oder/und die aktuelle Bremsentemperatur oder/und die zwischen Fahrzeugrädern und Fahrbahnoberfläche herrschenden Reibungsverhältnissen aufweisen.

9. Verfahren nach einem der vorangehenden Ansprüche,
   **dadurch gekennzeichnet, dass** die die Feststellbremse simulierende Betriebs-Bremskraft ($F\_B_F$) die vorher bestimmte Feststell-Bremskraft ($F\_F_{ges}$) um wenigstens 5% - bezogen auf den Betrag der vorher bestimmten Feststell-Bremskraft ($F\_F_{ges}$)-übersteigt.

10. Verfahren nach einem der vorangehenden Ansprüche,
    **dadurch gekennzeichnet, dass** die Steuerung von Betriebsbremse und Feststellbremse in einem Stabilitätssystem des Kraftfahrzeugs (10) integriert sind.

11. Verfahren nach einem der vorangehenden Ansprüche,
    **dadurch gekennzeichnet, dass** die Betriebsbremse hydraulisch betätigt wird.

12. Verfahren nach einem der vorangehenden Ansprüche,
    **dadurch gekennzeichnet, dass** die Feststellbremse elektromechanisch betätigt wird.

13. Verfahren nach einem der vorangehenden Ansprüche,
    **dadurch gekennzeichnet, dass** die Betriebsbremse oder/und die Feststellbremse beim aktiven Anfahren des Kraftfahrzeugs (10) durch den Fahrer selbsttätig gelöst werden.

14. Bremssystem zum Stabilisieren eines in Stillstand abgebremsten Kraftfahrzeugs, insbesondere zum Ausführen des Verfahrens nach einem der vorangehenden Ansprüche, wobei das Bremssystem unabhängig von einem Fahrer betätigbar ist und eine Betriebsbremse und eine Feststellbremse umfasst,
wobei es nach Erreichen des Fahrzeugstillstands eine von der Feststellbremse zu erzeugende, den Fahrzeugstillstand aufrecht erhaltende Feststell-Bremskraft ($F\_F_{ges}$) bestimmt,
**dadurch gekennzeichnet,**
**dass** es mit der Betriebsbremse fahrerunabhängig eine die Feststellbremse simulierende Betriebs-Bremskraft ($F\_B_F$) erzeugt, die betragsmäßig größer als die vorher bestimmten Feststell-Bremskraft ($F\_F_{ges}$) ist und deren Kraftkomponenten auf die Fahrzeugräder in Analogie zu den Kraftkomponenten der Feststell-Bremskraft ($F\_F_{ges}$) verteilt sind,
**dass** es bei oder nach Erreichen der die Feststellbremse simulierenden Betriebs-Bremskraft ($F\_B_F$) die vorher bestimmte Feststell-Bremskraft ($F\_F_{ges}$) mit der Feststellbremse aufbaut
und **dass** es bei oder nach Erreichen der Feststell-Bremskraft ($F\_F_{ges}$) in der Feststellbremse die Betriebsbremse deaktiviert.

## Claims

1. Method of stabilising a motor vehicle (10) which has been braked to a standstill and is equipped with a braking system that is adapted to be actuated independently of the driver and includes a service brake and a parking brake, a parking brake force ($F\_F_{total}$) which is to be generated by the parking brake and maintains the vehicle standstill being determined after the vehicle standstill is reached,
**characterized in**
**that** a service brake force ($F\_B_F$) which is greater in amount than the previously determined parking brake force ($F\_F_{total}$) and which simulates the parking brake, and the force components of which are distributed to the vehicle wheels analogously to the force components of the parking brake force ($F\_F_{total}$), is generated independently of the driver by means of the service brake,
**that** when or after the service brake force ($F\_B_F$) simulating the parking brake is reached, the previously determined parking brake force ($F\_F_{total}$) is built up by means of the parking brake,
and **that** when or after the parking brake force ($F\_F_{total}$) is reached in the parking brake, the service brake is deactivated.

2. Method according to Claim 1,
**characterized in that** after the vehicle comes to a standstill, the braking force ($F\_B_{total}$) which is built up in the service brake is first held independently of the driver, and after the expiry of a predetermined first time interval (t2 - t3) is set to the service brake force ($F\_B_F$) simulating the parking brake.

3. Method according to Claim 2,
**characterized in that** if the driver actively actuates the service brake within the first time interval (t2 - t3), the course of the first time interval is restarted.

4. Method according to one of Claims 1 to 3,
**characterized in that** the service brake force ($F\_B_F$) simulating the parking brake is maintained in the service brake over a predetermined second time interval (t4 - t7).

5. Method according to one of the preceding claims,
**characterized in that** after the service brake force ($F\_B_F$) simulating the parking brake is reached, the parking brake is activated after the expiry of a predetermined third time interval (t4 - t5).

6. Method according to Claim 4 or 5,
**characterized in that** if the driver actively actuates the service brake before the expiry of the second (t4 - t7) or third time interval (t4 - t5), the parking brake is deactivated.

7. Method according to one of the preceding claims,
**characterized in that** the amount or/and a braking force distribution of the parking brake force ($F\_F_{total}$) to individual vehicle wheels is determined from operating parameters of the vehicle (10).

**8.** Method according to Claim 7,
**characterized in that** the operating parameters include information about the current vehicle tilt or/and the current load state or/and the current brake temperature or/and the prevailing friction conditions between vehicle wheels and road surface.

**9.** Method according to one of the preceding claims,
**characterized in that** the service brake force ($F\_B_F$) simulating the parking brake exceeds the previously determined parking brake force ($F\_F_{total}$) by at least 5%, relative to the amount of the previously determined parking brake force ($F\_F_{total}$).

**10.** Method according to one of the preceding claims,
**characterized in that** the control of service brake and parking brake is integrated in a stability system of the vehicle (10).

**11.** Method according to one of the preceding claims,
**characterized in that** the service brake is actuated hydraulically.

**12.** Method according to one of the preceding claims,
**characterized in that** the parking brake is actuated electromechanically.

**13.** Method according to one of the preceding claims,
**characterized in that** the service brake or/and the parking brake are automatically released if the driver actively starts driving the vehicle (10).

**14.** Braking system to stabilise a motor vehicle which has been braked to a standstill, particularly to carry out the method according to one of the preceding claims, the braking system being adapted to be actuated independently of a driver and including a service brake and a parking brake,
and the braking system determining a parking brake force ($F\_F_{total}$) which is to be generated by the parking brake and maintains the vehicle standstill after the vehicle standstill is reached,
**characterized**
**in that** it generates, independently of the driver, by means of the service brake, a service brake force ($F\_B_F$), which is greater in amount than the previously determined parking brake force ($F\_F_{total}$), and which simulates the parking brake, and the force components of which are distributed to the vehicle wheels analogously to the force components of the parking brake force ($F\_F_{total}$),
that when or after the service brake force ($F\_B_F$) which simulates the parking brake is reached, it builds up, by means of the parking brake, the previously determined parking brake force ($F\_F_{total}$),
and that when or after the parking brake force ($F\_F_{total}$) is reached in the parking brake, it deactivates the service brake.

**Revendications**

**1.** Procédé de stabilisation d'un véhicule automobile (10) freiné jusqu'à l'arrêt, équipé d'un système de freinage actionnable indépendamment du conducteur comprenant un frein de service et un frein d'immobilisation,
où une force de frein d'immobilisation ($F\_F_{ges}$) maintenant l'arrêt du véhicule, à générer par le frein d'immobilisation, est déterminée une fois l'arrêt du véhicule obtenu,
**caractérisé**
**en ce qu'**une force de frein de service ($F\_B_F$) simulant le frein d'immobilisation est générée par le frein de service indépendamment du conducteur, laquelle est de valeur supérieure à la force de frein d'immobilisation ($F\_F_{ges}$) précédemment déterminée et dont les composantes de force sont réparties entre les roues du véhicule de manière analogue aux composantes de la force de frein d'immobilisation ($F\_F_{ges}$),
**en ce qu'**à l'obtention ou après l'obtention de la force de frein de service ($F\_B_F$) simulant le frein d'immobilisation, la force de frein d'immobilisation ($F\_F_{ges}$) précédemment déterminée est générée par le frein d'immobilisation,
et **en ce que** le frein de service est désactivé à l'obtention ou après l'obtention de la force de frein d'immobilisation ($F\_F_{ges}$) dans le frein d'immobilisation.

**2.** Procédé selon la revendication 1,
**caractérisé en ce qu'**une fois l'arrêt du véhicule obtenu, la force de frein générée dans le frein de service ($F\_B_{ges}$)

est d'abord maintenue indépendamment du conducteur, et est fixée à la force de frein de service ($F\_B_F$) simulant le frein d'immobilisation après écoulement d'un premier intervalle temporel prédéfini (t2 - t3).

**3.** Procédé selon la revendication 2,
   **caractérisé en ce qu'**en cas d'actionnement du frein de service par le conducteur pendant le premier intervalle temporel (t2-t3), le premier intervalle temporel repart du début.

**4.** Procédé selon l'une des revendications 1 à 3,
   **caractérisé en ce que** la force de frein de service ($F\_B_F$) simulant le frein d'immobilisation est maintenue dans le frein de service pendant un deuxième intervalle temporel prédéfini (t4 - t7).

**5.** Procédé selon l'une des revendications précédentes,
   **caractérisé en ce qu'**une fois atteinte la force de frein de service ($F\_B_F$) simulant le frein d'immobilisation, le frein d'immobilisation est activé à l'expiration d'un troisième intervalle temporel prédéfini (t4 - t5).

**6.** Procédé selon la revendication 4 ou la revendication 5,
   **caractérisé en ce que** le frein d'immobilisation est désactivé en cas d'actionnement du frein de service par le conducteur avant l'expiration du deuxième (t4 - t7) ou du troisième intervalle temporel prédéfini (t4 - t5).

**7.** Procédé selon l'une des revendications précédentes,
   **caractérisé en ce que** la valeur et/ou une répartition de la force de freinage du frein d'immobilisation ($F\_F_{ges}$) entre les différentes roues du véhicule sont déterminées à partir de paramètres de fonctionnement du véhicule automobile (10).

**8.** Procédé selon la revendication 7,
   **caractérisé en ce que** les paramètres de fonctionnement comportent des informations sur l'inclinaison actuelle du véhicule et/ou l'état de charge actuel et/ou la température de frein actuelle et/ou les conditions de frottement présentées entre les roues du véhicule et la surface de la chaussée.

**9.** Procédé selon l'une des revendications précédentes,
   **caractérisé en ce que** la force de frein de service ($F\_B_F$) simulant le frein d'immobilisation dépasse la force de frein d'immobilisation ($F\_F_{ges}$) précédemment déterminée d'au moins 5 %, par rapport à la valeur de la force de frein d'immobilisation ($F\_F_{ges}$) précédemment déterminée.

**10.** Procédé selon l'une des revendications précédentes,
   **caractérisé en ce que** les commandes du frein de service et du frein d'immobilisation sont intégrées à un système de stabilisation du véhicule automobile (10).

**11.** Procédé selon l'une des revendications précédentes,
   **caractérisé en ce que** le frein de service est à actionnement hydraulique.

**12.** Procédé selon l'une des revendications précédentes,
   **caractérisé en ce que** le frein d'immobilisation est à actionnement électromécanique.

**13.** Procédé selon l'une des revendications précédentes,
   **caractérisé en ce que** le frein de service et/ou le frein d'immobilisation sont automatiquement desserrés lors du démarrage du véhicule automobile (10) par le conducteur.

**14.** Système de freinage pour la stabilisation d'un véhicule automobile freiné jusqu'à l'arrêt, en particulier pour l'exécution du procédé selon l'une des revendications précédentes, ledit système de freinage étant actionnable indépendamment du conducteur et comprenant un frein de service et un frein d'immobilisation, déterminant une force de frein d'immobilisation ($F\_F_{ges}$) maintenant l'arrêt du véhicule, à générer par le frein d'immobilisation, une fois l'arrêt du véhicule obtenu,
   **caractérisé**
   **en ce qu'**il génère une force de frein de service ($F\_B_F$) simulant le frein d'immobilisation par le frein de service indépendamment du conducteur, laquelle est de valeur supérieure à la force de frein d'immobilisation ($F\_F_{ges}$) précédemment déterminée et dont les composantes de force sont réparties entre les roues du véhicule de manière analogue aux composantes de la force de frein d'immobilisation ($F\_F_{ges}$),

**en ce qu'**il génère par le frein d'immobilisation la force de frein d'immobilisation (F_$F_{ges}$) précédemment déterminée, à l'obtention ou après l'obtention de la force de frein de service (F_$B_F$) simulant le frein d'immobilisation, et **en ce qu'**il désactive le frein de service à l'obtention ou après l'obtention de la force de frein d'immobilisation (F_$F_{ges}$) dans le frein d'immobilisation.

**Fig. 1**

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0825081 B1